# DEMANDE DE BREVET EUROPEEN

(11) **EP 4 831 850 A1**
(43) Date de publication de la demande: **28.10.2026**
(21) Numéro de dépôt: 26156177.3
(22) Date de dépôt: 03.02.2026
(51) Int. Cl.: G06F 21/57, H04L 9/40, G06F 21/55

(54) **PROCÉDÉ MIS EN UVRE PAR ORDINATEUR POUR LA GÉNÉRATION DE SUGGESTIONS D ACTIONS LORS D'UN TEST D'INTRUSION INFORMATIQUE SUR UNE APPLICATION WEB**

(30) Priorité: 25.04.2025 FR 2504416
(71) Demandeur: Hackuity, 69009 Lyon (FR)
(72) Inventeur: TALON, Natan, 35690 Acigné (FR); LAAROUCHI, Youssef, 78280 GUYANCOURT (FR); VIET TRIEM TONG, Valérie, 35140 SAINT-OUEN-DES-ALLEUX (FR); HAN, Yufei, 35410 NOUVOITOU (FR); GUETTE, Gilles, 35770 VERN-SUR-SEICHE (FR)
(74) Mandataire: Ipsilon

(57) **Abrégé**

L'invention concerne un procédé de génération de suggestions d'actions lors d'un test d'intrusion informatique sur une application web de production, comportant les étapes suivantes :
- collecte (1) de données brutes générées lors d'une pluralité de tests d'intrusion d'entraînement,
- encodage (2) des données brutes en données d'entraînement,
- intégration (3) des données d'entraînement dans un programme informatique mettant en œuvre une méthode d'apprentissage automatique,
- utilisation (4) dudit programme informatique pour générer au moins une action probable lors d'un test d'intrusion sur ladite application web de production.

L'invention concerne également un système informatique pour la mise en œuvre du procédé selon l'invention.

## Description

### Domaine technique

La présente invention concerne le domaine de la sécurité informatique. Plus particulièrement, elle concerne un procédé mis en œuvre par ordinateur pour la génération de suggestions d'actions lors d'un test d'intrusion informatique.

L'invention trouve une application particulièrement avantageuse pour obtenir des suggestions d'actions particulièrement efficaces, permettant lors d'un test d'intrusion de découvrir un grand nombre de vulnérabilités en utilisant un nombre d'actions réduit.

### Technique antérieure

La sécurité informatique est aujourd'hui un domaine au centre duquel se trouvent des enjeux économiques et stratégiques fondamentaux pour toute organisation publique ou privée.

Dans ce contexte, il est important de constamment rechercher des vulnérabilités sur les applications web, afin de résoudre au moins les plus critiques d'entre elles. En effet, les applications web sont des objets critiques par elles-mêmes, car ils peuvent contenir des informations sensibles ou privées. De plus, ces applications constituent des points d'entrées vers des infrastructures informatiques, et leur compromission peut offrir un accès initial au système d'information à un attaquant. Les applications web sont très nombreuses et sont mises à jour régulièrement pour répondre aux besoins métier, chaque mise à jour pouvant faire apparaître de nouvelles vulnérabilités. Elles peuvent être construites en utilisant une variété de technologies différentes, tant au niveau du backend que du frontend, ce qui rend la tâche de sécurisation encore plus complexe, soulignant l'importance d'une vigilance constante et d'une approche proactive en matière de sécurité.

Dans ce contexte, le test d'intrusion (aussi appelé « pentest », contraction de l'anglais « penetration testing ») est utilisé pour évaluer comment un attaquant peut compromettre une application web en exploitant des vulnérabilités ou des erreurs de configuration. Cependant, la mise en œuvre de tests d'intrusion manuels est chronophage, nécessite beaucoup de ressources, et est limité par la disponibilité d'experts qualifiés, ce qui limite son aptitude à être utilisé à grande échelle.

Une approche courante des tests de sécurité est l'utilisation de scanners de vulnérabilité web. Ces outils explorent automatiquement les applications web pour identifier les pages accessibles et les vecteurs d'entrée (par exemple, les champs de formulaire, les paramètres HTTP), génèrent des entrées préconçues et analysent les réponses de l'application pour détecter les vulnérabilités. Les scanners de vulnérabilité web sont populaires en raison de leur indépendance technologique, de leur facilité d'utilisation et de leur automatisation élevée. Cependant, ces scanners montrent des limitations significatives dans la détection des vulnérabilités dans les applications web modernes. Ils s'adaptent mal à la logique des applications encodées avec du contenu dynamique, des formulaires en plusieurs étapes, ou encore des fonctionnalités complexes de Javascript, ce qui entraîne un taux élevé de vulnérabilités manquées et de faux positifs.

Le problème technique résolu par l'invention est donc de proposer un procédé de génération de suggestions d'actions lors d'un test d'intrusion informatique sur une application web, utilisant une méthode d'apprentissage automatique alimentée par des tests d'intrusion passés. Ce procédé permet d'obtenir des suggestions pertinentes, et constitue un outil permettant d'aider les testeurs à détecter un maximum de vulnérabilités en utilisant un minimum d'actions, donc dans un temps réduit.

### Exposé de l'invention

La présente invention vise à résoudre ce problème technique en proposant un procédé mis en œuvre par ordinateur pour la génération de suggestions d'actions lors d'un test d'intrusion informatique sur une application web de production hébergée sur un serveur, comportant les étapes suivantes :
- collecte de données brutes générées lors d'une pluralité de tests d'intrusion d'entraînement, effectués chacun par un testeur d'entraînement, sur au moins une application web d'entraînement, chaque test d'intrusion d'entraînement consistant en une suite d'actions effectuées par le testeur d'entraînement sur l'application web d'entraînement, ayant pour conséquence l'accès par le testeur d'entraînement à une pluralité de pages de l'application web d'entraînement, certaines combinaisons d'actions effectuées sur certaines pages générant l'identification de vulnérabilités de l'application web d'entraînement, lesdites données brutes comportant au moins, pour chaque test d'intrusion d'entraînement :
   - une pluralité d'actions effectuées par ledit testeur d'entraînement,
   - pour chaque action, une base de connaissance comportant :

.. l'ensemble des pages visitées par le testeur d'entraînement préalablement à ladite action,
.. si au moins un cookie a été généré préalablement à ladite action, l'ensemble des cookies générés préalablement à ladite action, et
- encodage des données brutes en données d'entraînement, lors duquel chaque action est encodée dans un vecteur d'action de taille fixe, chaque base de connaissance est encodée dans un vecteur de base de taille fixe, et le vecteur de base comporte en outre un sous-vecteur de vulnérabilités comportant au moins le nombre de vulnérabilités identifiées préalablement à l'action correspondante à la base de connaissance,
- intégration des données d'entraînement dans un programme informatique mettant en œuvre une méthode d'apprentissage automatique, en faisant correspondre à chaque base de connaissance l'action encodée réalisée à partir de cette base,
- utilisation dudit programme informatique pour générer au moins une action probable en fonction de la base de connaissance correspondante lors d'un test d'intrusion sur ladite application web de production.

Grâce à ces dispositions, un ou plusieurs suggestions d'actions à réaliser peuvent être mises à disposition, à chaque étape d'un test d'intrusion, du testeur. Le programme informatique ayant appris du comportement de testeurs lors de tests précédents, les suggestions sont pertinentes et permettent au testeur de découvrir rapidement les vulnérabilités.

La méthode d'apprentissage automatique peut être une méthode de type forêt d'arbres décisionnels, qui est une méthode particulièrement performante pour ce type de procédé.

Lors de l'étape de collecte de données brutes, un filtre peut être mis en œuvre pour que ne soient pas collectées des données indésirables, lesdites données indésirables comportant les données générées par les interactions entre l'application web d'entraînement et des robots d'indexation, des botnets, et/ou des scanners de vulnérabilités, ce qui permet d'améliorer la précision des suggestions d'actions.

Ladite base de connaissance peut comporter au moins deux blocs de connaissance, chaque bloc de connaissance pouvant correspondre à un profil utilisateur distinct utilisé par le testeur d'entraînement pour interagir avec l'application web d'entraînement, au moins deux blocs de connaissance correspondant à deux profils utilisateurs disposant de niveaux de privilège distincts, chaque bloc de connaissance pouvant comporter :
. l'ensemble des pages visitées par le testeur d'entraînement par l'intermédiaire du profil utilisateur correspondant,
. si au moins un cookie a été généré lors de l'utilisation de ce profil utilisateur pour interagir avec l'application web d'entraînement, l'ensemble des cookies générés lors de cette utilisation,
la base de connaissance comportant au moins deux blocs de connaissance correspondant à deux profils utilisateurs disposant de niveaux de privilège distincts, ce qui permet de bien différencier lors de l'entraînement les données générées avec des types d'accès différents à l'application web.

Pour chaque bloc de connaissance, l'ensemble des pages visitées peut être encodé dans un sous-vecteur de pages de taille fixe, l'ensemble des cookies peut être encodé dans un sous-vecteur de cookies de taille fixe, et le vecteur de base peut comporter :
- au moins un sous-vecteur de vulnérabilités de taille fixe,
- au moins un sous-vecteur de pages et au moins un sous-vecteur de cookies issus chacun d'un bloc de connaissance correspondant à un profil utilisateur non identifié,
- au moins un sous-vecteur de pages et au moins un sous-vecteur de cookies issus chacun d'un bloc de connaissance correspondant à un profil utilisateur identifié qui a des droits d'accès restreints à l'application web d'entraînement, et
- au moins un sous-vecteur de pages et au moins un sous-vecteur de cookies issus chacun d'un bloc de connaissance correspondant à un profil utilisateur identifié qui a des droits d'accès non restreints à l'application web d'entraînement,
ce qui est un mode de réalisation particulièrement efficace en raison de la normalisation possible de l'encodage et de la différentiation des données par type d'utilisateur.

Le vecteur de base peut comporter :
- un sous-vecteur de vulnérabilités de taille fixe
- un sous-vecteur de pages et un sous-vecteur de cookies issus chacun d'un bloc de connaissance correspondant à un profil utilisateur non identifié,
- au moins deux sous-vecteurs de pages et au moins deux sous-vecteurs de cookies issus chacun d'un bloc de connaissance correspondant à un profil utilisateur identifié qui a des droits d'accès restreints à l'application web d'entraînement, et
- au moins deux sous-vecteurs de pages et au moins deux sous-vecteurs de cookies issus chacun d'un bloc de connaissance correspondant à un profil utilisateur identifié qui a des droits d'accès non restreints à l'application web d'entraînement,
ce qui permet d'obtenir des suggestions optimales.

Le vecteur de base peut comporter en outre :
- un sous-vecteur agrégé de pages, résultant de l'agrégation de sous-vecteurs de pages issus chacun d'un bloc de connaissance correspondant à des profils utilisateurs identifiés ayant des droits d'accès restreints à l'application web d'entraînement,
- un sous-vecteur agrégé de cookies, résultant de l'agrégation de sous-vecteurs de cookies issus chacun d'un bloc de connaissance correspondant à des profils utilisateurs identifiés ayant des droits d'accès restreints à l'application web d'entraînement,
- un sous-vecteur agrégé de pages, résultant de l'agrégation de sous-vecteurs de pages issus chacun d'un bloc de connaissance correspondant à des profils utilisateurs identifiés ayant des droits d'accès non restreints à l'application web d'entraînement, et
- un sous-vecteur agrégé de cookies, résultant de l'agrégation de sous-vecteurs de cookies issus chacun d'un bloc de connaissance correspondant à des profils utilisateurs identifiés ayant des droits d'accès non restreints à l'application web d'entraînement,
ce qui est le meilleur équilibre entre une réduction de la taille des données, et l'obtention de suggestions d'actions particulièrement pertinentes.

Chaque sous-vecteur de cookies peut comporter une première moitié dans laquelle est encodé le cookie de session, et une deuxième moitié dans laquelle sont encodés tous les autres cookies considérés, ce qui permet de conserver au mieux les données relatives au cookie de session, données particulièrement importantes.

Ledit procédé peut comporter une étape de sélection des tests d'intrusion d'entraînement, seules les données d'entraînement générées lors des tests d'intrusion d'entraînement sélectionnés pouvant être intégrées audit programme informatique, la sélection pouvant être effectuée à partir d'au moins un indicateur de performance, prenant en compte :
- le nombre de vulnérabilités identifiées lors du test d'intrusion d'entraînement,
- le nombre de vulnérabilités exploitables identifiées lors du test d'intrusion d'entraînement,
- le rapport entre le nombre de vulnérabilité identifiées et le nombre d'actions effectuées lors du test d'intrusion d'entraînement,
- le rapport entre le nombre de vulnérabilité identifiées et le nombre d'actions d'exploration, une action d'exploration étant une action destinée à augmenter les connaissances du testeur d'entraînement relatives à l'application web d'entraînement,
- le rapport entre le nombre de vulnérabilité identifiées et le nombre d'actions d'exploitation, une action d'exploitation étant une action lors de laquelle une charge utile destinée à l'exploitation d'une vulnérabilité est envoyée à l'application web d'entraînement,
ce qui permet d'obtenir des suggestions les plus pertinentes, en écartant de l'entraînement les comportement des testeurs les moins habiles pour ne prendre pour exemple que les testeurs le plus performants.

Lors de l'étape d'intégration des données d'entraînement et d'utilisation du programme informatique, la méthode d'apprentissage automatique peut faire correspondre à chaque action encodée la base de connaissance correspondante, la précédente action effectuée, ainsi que la base de connaissance correspondante à la précédente action effectuée, ce qui permet au modèle d'apprentissage de prendre en compte plus d'information de contexte dans la génération de suggestions, et résulte généralement en la génération de suggestions plus pertinentes.

Lors de l'étape de collecte de données brutes, un filtre peut être mis en œuvre pour que ne soient pas collectées un certain nombre d'actions les plus fréquentes, et les bases de connaissance correspondantes.

La présente invention concerne également un système informatique comportant au moins un ordinateur, configuré pour mettre en œuvre un procédé selon l'invention.

### Brève description des dessins

La présente invention et ses avantages apparaîtront mieux dans la description suivante de plusieurs modes de réalisation donnés à titre d'exemples non limitatifs, en référence au dessin annexé, dans lequel:

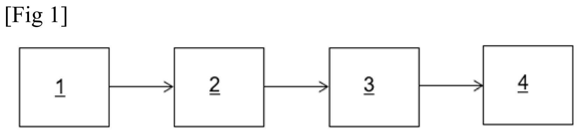

[Fig 1] la fig. 1 est une vue schématique du procédé selon l'invention.

### Description des modes de réalisation

Le procédé selon l'invention permet de générer des suggestions d'actions lors d'un test d'intrusion informatique sur un application web. Une application web est un logiciel manipulable directement en ligne grâce à un navigateur web, et qui ne nécessite donc pas d'installation sur les machines clientes. Une application web est généralement installée sur un serveur, et est accessible à distance, via un réseau informatique tel que l'Internet.

Le procédé selon l'invention utilise, pour générer ces suggestions d'actions, une méthode d'apprentissage automatique, comportant donc deux phases : une phase d'entraînement d'un programme informatique, avec des données d'apprentissage, puis une phase d'exploitation du programme informatique, avec de nouvelles données.

Par la suite, on différencie les applications web d'entraînement, utilisées pour la phase d'entraînement, puis les applications web de production, sur lesquelles est utilisé le programme informatique entraîné.

La première étape du procédé est une étape de collecte 1 de données brutes, générées lors d'une pluralité de tests d'intrusion d'entraînement. Les tests d'intrusion d'entraînement sont générés par un ou plusieurs testeurs d'entraînement, sur au moins une application web d'entraînement, de préférence sur plusieurs applications web d'entraînement.

Les testeurs d'entraînement sont de préférence des opérateurs humains.

Afin de collecter les données brutes, il est par exemple possible d'utiliser les données générées lors d'une compétition de type « capture du drapeau » (ou « CTF » pour l'anglais « Capture the Flag »). Ce qu'on appelle un test d'intrusion d'entraînement est alors la participation d'une personne à une compétition CTF. Ce type de compétition consiste pour les participants à tenter de trouver et d'exploiter des vulnérabilités affectant des logiciels, afin de s'introduire sur des systèmes informatiques pour récupérer des drapeaux, preuves de l'intrusion, ceci dans un objectif éducatif, ou de démonstration de capacités informatiques. L'avantage d'utiliser ce type de données brutes est que l'environnement du test d'intrusion, et notamment le nombre total de vulnérabilités, ainsi que leurs exploitations possibles, est bien connu.

Qu'il s'agisse d'un compétiteur d'une compétition CTF ou de données d'un test d'intrusion d'entraînement d'une autre provenance, les tests d'intrusion d'entraînement correspondent à un test d'intrusion classique. Il s'agit pour le testeur d'effectuer une suite d'actions sur l'application web d'entraînement, actions qui ont pour conséquence l'accès à des pages de l'application web d'entraînement et éventuellement la génération de cookies. La combinaison de certaines actions, effectuées à partir de certaines pages de l'application d'entraînement, permet au testeur d'identifier des vulnérabilités de l'application d'entraînement, et éventuellement de les exploiter.

Dans certains modes de réalisation, et notamment lorsque l'application web d'entraînement est publiquement accessible sur Internet, il est avantageux d'effectuer, lors de l'étape de collecte de données brutes, un filtrage pour ne pas prendre en compte dans la suite les données indésirables. Ces données indésirables peuvent notamment être de deux types :
- générées par la visite de l'application web d'entraînement par des robots génériques, tels que des robots d'indexation et/ou des botnets. Une analyse de l'activité du serveur hébergeant l'application web d'entraînement avant la tenue du test d'entraînement peut être effectuée afin d'isoler ce type d'activité et l'éliminer des données brutes
- générées par les testeurs d'entraînement utilisant des scanners de vulnérabilités. Ce type d'interactions peuvent être identifiées, car elles génèrent en général un grand nombre d'actions en un temps très court, comportement improbable pour un humain.

Afin d'exploiter les données brutes, celles-ci sont organisées de la façon suivante. Le test d'entraînement est considéré comme étant une succession d'un certain nombre d'étapes, A chaque étape, le testeur d'entraînement effectue une certaine action, ce qui a pour conséquence une certaine connaissance de l'application web d'entraînement.

Une base de connaissance Kᵢ représente l'état des connaissances du testeur d'entraînement à un instant i, et une action aᵢ permet de passer de la base de connaissance Kᵢ₋₁ à la base de connaissance Kᵢ. Le test d'intrusion d'entraînement peut alors être modélisé de la façon suivante : ${K}_{0} {\to }^{{a}_{1}} {K}_{1} {\to }^{{a}_{2}} {K}_{2} {\to }^{{a}_{3}} … {\to }^{{a}_{n}} {K}_{n}$

La base de connaissance, qui correspond à un instant donné, comporte au moins l'ensemble des pages ayant été visitées par le testeur d'entraînement depuis le début du test d'entraînement jusqu'à cet instant, et s'il y en a, l'ensemble des cookies ayant été générés depuis le début du test d'entraînement jusqu'à cet instant.

Les pages visitées sont par exemple stockées chacune sous forme de fichier HTML. Les cookies sont par exemple stockés chacun sous forme d'un ensemble comportant un nom, une valeur, une durée de vie, et un nom de domaine.

Dans un mode de réalisation préféré, la base de connaissance comporte plusieurs blocs de connaissance, correspondant chacun à un profil utilisateur distinct utilisé par le testeur d'entraînement pour interagir avec l'application web d'entraînement. Les profils utilisateurs distincts peuvent notamment présenter des niveaux de privilège distincts. Par exemple, il peut s'agir d'un profil utilisateur non authentifié, d'un ou plusieurs profils utilisateurs authentifiés ayant des droits d'accès restreints à l'application web d'entraînement, et d'un ou plusieurs profils utilisateurs authentifiés, de type administrateurs, ayant des droits d'accès non restreints à l'application web d'entraînement.

Chaque bloc de connaissance comporte alors l'ensemble des pages visitées et cookies générées en utilisant le profil utilisateur correspondant à ce bloc de connaissance.

Quatre types d'actions sont définies :
- « AcessWebPage » : changement de page pour le profil utilisateur actuel,
- « SendHttpForm » : envoi d'un formulaire,
- « SearchData » : recherche d'une chaîne de caractère dans le contenu de la page courante,
- « SetCookie » : attribue une valeur à un cookie.

Eventuellement, on peut utiliser également le type suivant :
- « TriggerJsEvent » : interaction avec un élément dynamique de l'application web, par exemple un bouton.

Une fois les données brutes collectées, elles sont encodées lors d'une étape d'encodage 2, pour obtenir des données d'entraînement, utilisables de façon optimale par un programme informatique utilisant une méthode d'apprentissage automatique.

Pour ce faire, chaque action est encodée dans un vecteur d'action de taille fixe, et chaque base de connaissance est encodée dans un vecteur de base de taille fixe.

En plus des données précédemment mentionnées comme faisant partie de la base de connaissance, le vecteur de base comporte un sous-vecteur de vulnérabilités, comportant au moins le nombre de vulnérabilités identifiées depuis le début du test, jusqu'à l'instant correspondant à cette base de connaissance.

L'encodage permet de réduire la dimensionnalité des données, tout en conservant les informations clés du test d'intrusion d'entraînement.

De façon avantageuse, la base de connaissance comporte une pluralité de blocs de connaissance, et pour chaque bloc de connaissance, l'ensemble des pages visitées est encodé dans un sous-vecteur de pages de taille fixe et l'ensemble des cookies est encodé dans un sous-vecteur de cookies de taille fixe.

Par exemple, chaque page est encodée de manière à conserver au moins une partie des données booléennes suivantes :
- caractéristiques de la page :
   (1) comporte des données sensibles d'utilisateurs ?
   (2) accepte des données de l'utilisateur (formulaires, paramètres URL) ?
- fonctions de la page :
   (3) page de connexion ?
   (4) page d'inscription ?
   (5) interactions avec la page peuvent modifier les données ou le statut de l'utilisateur ?
- statut de la page :
   (6) page non visitée ?
   (7) page a pu changer suite à des actions de l'utilisateur ?
   (8) page inaccessible due à une protection (par exemple avec redirection vers une page de connexion) ?

Toutes ces données peuvent par exemple être conservées pour chaque page, au sein d'un sous-vecteur de huit booléens.

L'encodage d'un ensemble de page peut alors être le résultat de l'aggrégation de sous-vecteurs correspondant chacun à une page, par exemple en effectuant une somme pour passer de booléens à un nombre entier pour chaque champ du sous-vecteur.

Par exemple, chaque cookie est encodé de manière à conserver au moins une partie des données booléennes suivantes :
(1) s'agit-il d'un cookie de session ?
(2) le cookie comporte-t-il un nom d'utilisateur (ou login) ?
(3) le cookie comporte-t-il un mot de passe ?
(4) le cookie est-il dans le champ d'application du test d'intrusion d'entraînement ?
(5) le cookie comporte-t-il une information à propos de son expiration ?
(6) le cookie est-il expiré ?
(7) le cookie a-t-il une date d'expiration normale ?
(8) le drapeau « HttpOnly » du cookie est-il activé ?
(9) le drapeau « Secure » du cookie est-il activé ?
(10) le drapeau « SameSite » du cookie est-il activé ?

Toutes ces données peuvent par exemple être conservées pour chaque cookie, au sein d'un sous-vecteur de 10 booléens.

Par exemple, le cookie suivant : « Set-Cookie : session=s3AJqzaEvgb ; Path =/ ; HttpOnly ; Secure ; Max-Age=604800 » peut être encodé, en utilisant les champs ci-dessus dans l'ordre, par le sous-vecteur « 1001101110 ».

L'encodage d'un ensemble de cookies peut alors être le résultat de l'aggrégation de sous-vecteurs correspondant chacun à un cookie, par exemple en effectuant une somme pour passer de booléens à un nombre entier pour chaque champ du sous-vecteur.

Dans un mode de réalisation préféré, afin de conserver les informations du cookie de session, un ensemble de cookies peut être encodé dans un sous-vecteur de cookies comportant une première moitié dans laquelle est encodé le cookie de session, et une deuxième moitié résultant de l'agrégation des sous-vecteurs correspondant à tous les autres cookies. Par exemple, en utilisant l'encodage détaillé ci-dessus, le sous-vecteur cookies a dans ce cas une longueur de 20, dont 10 booléens et 10 entiers.

Les vulnérabilités liées à une base de connaissance sont également encodées. Chaque vulnérabilité est liée à une page sur laquelle la vulnérabilité a été découverte, ou déclenchée.

Pour chaque base de connaissance, l'ensemble des vulnérabilités découvertes à l'instant correspondant à cette base peut être encodé de manière à conserver au moins une partie des données suivantes sous forme de nombres entiers :
(1) le nombre total de vulnérabilités trouvées,
   - caractéristiques des pages correspondantes aux vulnérabilités trouvées :
(2) nombre de pages comportant des données sensibles d'utilisateurs,
(3) nombre de pages acceptant des données de l'utilisateur (formulaires, paramètres URL),
(4) nombre de pages de connexion,
(5) nombre de pages d'inscription,
   - accès et modification des pages correspondantes aux vulnérabilités trouvées :
(6) nombre de pages autorisant des modifications par les utilisateurs,
(7) nombre de pages non visitées,
(8) nombre de pages ayant pu changer suite à des actions de l'utilisateur,
(9) nombre de pages inaccessibles à cause de mécanismes de protection.

Toutes ces données peuvent par exemple être conservées pour chaque base de connaissance, au sein d'un sous-vecteur de neuf booléens.

Le vecteur de base, dans lequel est encodé la base de connaissance, peut comporter un ensemble de sous-vecteurs :
- au moins un, de préférence exactement un sous-vecteur de vulnérabilités de taille fixe, et
- au moins un sous-vecteur de pages et au moins un sous-vecteur de cookies, encodés par exemple comme décrit ci-dessus.

De préférence, la base de connaissance comporte une pluralité de blocs de connaissance, correspondant à des droits d'accès différents à l'application web d'entraînement, ou aux applications web d'entraînement. Dans ce cas, le vecteur de base peut comporter au moins un sous-vecteur de pages et au moins un sous-vecteur de cookies, par exemple encodés comme décrits précédemment, pour chaque niveau d'accès : non authentifié, authentifié avec droits d'accès restreints, authentifiés avec droits d'accès non restreints.

De préférence, le vecteur de base peut comporter :
- un sous-vecteur de pages et un sous-vecteur de cookies correspondant à un profil utilisateur non authentifié,
- au moins deux, de préférence exactement deux, sous-vecteurs de pages, correspondant chacun à un profil utilisateur authentifié avec droits d'accès restreints,
- au moins deux, de préférence exactement deux, sous-vecteurs de cookies, correspondant chacun à un profil utilisateur authentifié avec droits d'accès restreints,
- au moins deux, de préférence exactement deux, sous-vecteurs de pages, correspondant chacun à un profil utilisateur authentifié avec droits d'accès non restreints,
- au moins deux, de préférence exactement deux, sous-vecteurs de cookies, correspondant chacun à un profil utilisateur authentifié avec droits d'accès non restreints.

En effet, le maintien de sous-vecteurs distincts pour deux profils utilisateurs par catégorie authentifiée permet d'analyser l'application du contrôle d'accès à la fois au sein d'un même niveau de privilèges et entre différents niveaux.

Le sous-vecteur de base comporte encore encore de préférence :
- un sous-vecteur agrégé de pages, résultant de l'agrégation de sous-vecteurs de pages issus chacun d'un bloc de connaissance correspondant à des profils utilisateurs identifiés ayant des droits d'accès restreints à l'application web d'entraînement,
- un sous-vecteur agrégé de cookies, résultant de l'agrégation de sous-vecteurs de cookies issus chacun d'un bloc de connaissance correspondant à des profils utilisateurs identifiés ayant des droits d'accès restreints à l'application web d'entraînement,
- un sous-vecteur agrégé de pages, résultant de l'agrégation de sous-vecteurs de pages issus chacun d'un bloc de connaissance correspondant à des profils utilisateurs identifiés ayant des droits d'accès non restreints à l'application web d'entraînement, et
- un sous-vecteur agrégé de cookies, résultant de l'agrégation de sous-vecteurs de cookies issus chacun d'un bloc de connaissance correspondant à des profils utilisateurs identifiés ayant des droits d'accès non restreints à l'application web d'entraînement.

Chaque action est encodée de manière à conserver au moins une partie des données suivantes :
- quel est le type de commande ? quatre options possibles : AccessWebPage, SendHttpForm, SearchData, SetCookie,
- la page cible comporte-t-elle des données sensibles d'utilisateurs ? Oui ou non,
- la page cible accepte-t-elle des données de l'utilisateur ? Oui ou non,
- Rôle fonctionnel de la page cible ? quatre options possibles : Aucun, connexion, inscription, modification des données ou du statut de l'utilisateur,
- Statut de la page cible ? quatre options possibles : Aucun, non visitée, peut être modifiée, inaccessible,
- Type de données dans les attributs de l'action ? quatre options possibles : Aucune donnée, données aléatoires, charge utile d'exploration (charge utile envoyée par le testeur visant à augmenter ses connaissances de l'application web d'entraînement ), charge utile d'exploitation (charge utile envoyée par le testeur visant à exploiter une vulnérabilité).

Ces données peuvent être encodées de différentes manières. De préférence, on utilise un codage de type « one-hot », c'est-à-dire que les actions sont encodées sur un vecteur de booléen dans lequel toutes les valeurs sont à 0, sauf une valeur correspondant à ladite action. Si l'on prend les données listées ci-dessus, on obtient 1024 actions possibles, donc un encodage sur des vecteurs de taille 1024 booléens.

L'encodage des actions est au moins en partie, de préférence entièrement réversible. Dans ce dernier cas, aucune information n'est perdue lors d'un cycle d'encodage et de décodage de l'action. En effet, lors de l'exploitation de l'invention, la sortie de l'algorithme d'apprentissage automatique du programme informatique est un ensemble d'au moins une suggestion d'action, qui est d'abord à l'état encodée. Un encodage entièrement réversible permet, lors du décodage, de connaître avec précision l'action suggérée.

Une fois les données d'entraînement, c'est-à-dire les bases de connaissance et les actions, encodées, celles-ci sont intégrées dans le programme informatique, lors d'une étape d'intégration 3, et plus précisément dans la méthode d'apprentissage automatique. La méthode d'apprentissage automatique apprend ainsi à faire le lien entre les actions, et les bases de connaissance à disposition des testeurs d'entraînement au moment où ils ont effectué ces actions.

Enfin, le programme informatique, entraîné, est utilisé, lors d'une étape d'utilisation 4, pour générer au moins une action probable en fonction de la base de connaissance correspondante lors d'un test d'intrusion sur une application web à tester.

La méthode d'apprentissage automatique est par exemple de type forêt d'arbres décisionnels (ou en anglais « Random Forest »), avec par exemple 200 estimateurs. Alternativement, la méthode des k plus proches voisins peut être utilisée, avec k prenant des valeurs par exemple de 5, 25 ou 45, de préférence 25.

Le programme informatique peut être configuré pour générer une liste de plusieurs suggestions. Les suggestions sont alors ordonnées par ordre de probabilité décroissante. Cela permet d'avoir plus de chances que l'action la plus pertinente soit effectivement suggérée.

Afin d'obtenir des suggestions d'une meilleure qualité, les données brutes peuvent être triées, afin de ne retenir que celles issues des tests d'intrusion d'entraînement ayant été réalisés de la façon la plus performante. Par exemple, si les données brutes sont issues d'une compétition CTF, i1 peut être intéressant de n'utiliser que les données générées par les testeurs les plus performants.

Pour réaliser ce tri, des indicateurs de performances peuvent être définis, par exemple un ou plusieurs indicateurs parmi :
- le nombre total de vulnérabilités identifiées lors du test d'intrusion d'entraînement. Il est possible dans un tel indicateur de différencier les vulnérabilités les plus critiques, par exemple parce qu'elles peuvent être exploitables, des autres. Par exemple, un poids différent peut être affecté à une vulnérabilité exploitable par rapport à une vulnérabilité non exploitable. On peut par exemple affecter un poids de 2 à une vulnérabilité exploitable et un poids de 1 à une vulnérabilité non exploitable,
- le rapport entre le nombre de vulnérabilité identifiées et le nombre d'actions effectuées lors du test d'intrusion d'entraînement. Ce rapport est par exemple égal à l'indicateur ci-dessus, utilisant des poids ou non, divisé par le nombre total d'actions réalisées par le testeur d'entraînement,
- le rapport entre le nombre de vulnérabilité identifiées et le nombre d'actions d'exploration. Une action d'exploration est alors définie comme étant une action destinée à augmenter les connaissances du testeur d'entraînement relatives à l'application web d'entraînement, cette action pouvant par exemple être l'exploration d'une nouvelle page, ou l'utilisation d'une charge utile exploratoire,
- le rapport entre le nombre de vulnérabilité identifiées et le nombre d'actions d'exploitation, une action d'exploitation étant une action lors de laquelle une charge utile destinée à l'exploitation d'une vulnérabilité est envoyée à l'application web d'entraînement, une charge utile pouvant être considérée comme étant une charge utile d'exploitation lorsqu'elle est construite pour acquérir efficacement des connaissances à partir d'une vulnérabilité au lieu de simplement montrer à un attaquant les capacités dont il dispose.

Les deux derniers indicateurs mentionnés ci-dessous permettent d'une part de sélectionner les testeurs très efficaces dans la découverte des vulnérabilités mais qui peinent à les exploiter, et ceux qui excellent dans l'exploitation des vulnérabilités mais qui sont moins efficaces dans leur découverte.

A partir des données brutes, on peut par exemple sélectionner, et n'utiliser pour l'entraînement du modèle d'apprentissage automatique que les données issues des interactions des N meilleurs testeurs d'entraînement selon chaque indicateur de performance considéré, N pouvant par exemple être égal à 10% du nombre total de testeurs d'entraînement, ou N pouvant être une valeur absolue, par exemple entre 5 et 10, par exemple 8.

Dans un mode de réalisation préféré, lors de l'étape d'intégration des données d'entraînement et d'utilisation du programme informatique, la méthode d'apprentissage automatique fait correspondre à chaque action encodée la base de connaissance correspondante, ainsi que des éléments de contexte : la précédente action effectuée, et la base de connaissance correspondante à la précédente action effectuée.

Différentes versions du procédé selon l'invention ont été testées, en faisant varier les éléments suivants :
- prise en compte du contexte : modèle prenant en compte seulement Kᵢ pour générer des suggestions d'actions aᵢ₊₁,
- non prise en compte du contexte : modèle prenant en compte Kᵢ₋₁, aᵢ et Kᵢ pour générer des suggestions d'actions aᵢ₊₁,
- différents types de modèles d'apprentissage automatique : Forêt d'arbres décisionnels, Méthode des k plus proches voisins (k-NN) avec k = 5, 25 et 45.

Pour chaque cas, un même jeu de données d'entraînement, avec le même encodage, a été utilisé. Les performances ont ensuite été mesurées par l'intermédiaire des métriques suivantes, les suggestions d'actions correctes et la meilleure suggestion d'action pour chaque base de connaissance étant connues :
- Precision@k indique la fraction de suggestions correctes dans le top-k des actions suggérées, et
- MRR (pour l'anglais « Mean Reciprocal Rank ») indique la position moyenne de la meilleure suggestion dans la liste produite par le programme informatique.

Pour mieux comprendre le comportement du modèle, les actions fréquentes, qui apparaissent dans au moins 45% % des tests, et les actions rares, qui apparaissent dans moins de 2 % des cas, sont évaluées séparément. Selon le jeu de données, ces pourcentages auraient pu être différents, par exemple 30 et 50 % pour la borne minimum des actions fréquentes, et entre 1 et 5% pour la borne maximum des actions rares.

Les résultats sont les suivants pour les actions fréquentes :

**[Table 1]**

| Prise en compte du contexte ? | Modèle d'apprentissage | Precision@1 | Precision@5 | Precision@8 | MRR |
|---|---|---|---|---|---|
| Non | k-NN (k=5) | 0,298 | 0,612 | 0,613 | 1,857 |
| Non | k-NN (k=25) | 0,285 | 0,807 | 0,896 | 2,898 |
| Non | k-NN (k=45) | 0,246 | 0,804 | 0,924 | 3,232 |
| Non | Forêt d'arbres décisionnels | 0,251 | 0,789 | 0,834 | 2,708 |
| Oui | k-NN (k=5) | 0,351 | 0,704 | 0,704 | 1,901 |
| Oui | k-NN (k=25) | 0,377 | 0,712 | 0,712 | 1,875 |
| Oui | k-NN (k=45) | 0,249 | 0,782 | 0,929 | 3,243 |
| Oui | Forêt d'arbres décisionnels | 0,433 | 0,833 | 0,900 | 2,390 |

Les résultats pour les actions rares sont les suivants :

**[Table 2]**

| Prise en compte du contexte ? | Modèle d'apprentissage | Precision@1 | Precision@5 | Precision@8 | MRR |
|---|---|---|---|---|---|
| Non | k-NN (k=5) | 0,415 | 0,727 | 0,736 | 1,686 |
| Non | k-NN (k=25) | 0,340 | 0,841 | 0,915 | 2,594 |
| Non | k-NN (k=45) | 0,343 | 0,798 | 0,920 | 2,944 |
| Non | Forêt d'arbres décisionnels | 0,360 | 0,829 | 0,877 | 2,327 |
| Oui | k-NN (k=5) | 0,446 | 0,747 | 0,747 | 1,660 |
| Oui | k-NN (k=25) | 0,330 | 0,825 | 0,901 | 2,569 |
| Oui | k-NN (k=45) | 0,340 | 0,803 | 0,903 | 2,848 |
| Oui | Forêt d'arbres décisionnels | 0,514 | 0,871 | 0,910 | 2,042 |

On observe que les modèles dans lesquels le contexte est pris en compte ont de meilleures performances que les systèmes ne prenant pas en compte le contexte, particulièrement pour les métriques Precision@1 et MRR.

En moyenne, la plupart des modèles incluent la meilleure action dans le top trois de leurs suggestions, comme l'indique le MRR.

On observe aussi qu'en ce qui concerne la méthode des k plus proches voisins, choisir un k de 45 n'est pas particulièrement avantageux. Une valeur de k = 15 semble donc une meilleure option.

Les observations relatives aux performances relatives des différents modèles peuvent dépendre du jeu de données utilisées pour l'entraînement. Par exemple, certains modèles peuvent par exemple être plus performants que d'autres lorsqu'un grand nombre de données d'entraînement sont utilisées, alors que ce n'est pas le cas si la quantité de données d'entraînement disponible est restreinte.

D'après ces mesures, il semble que 5 soit un nombre optimal de suggestions affichées par le programme informatique. En effet, on obtient la métrique de Precision@5 est satisfaisante, et le nombre de 5 est un nombre suffisamment faible de suggestions, parmi toutes les actions possibles, pour que le procédé apporte une vraie plus-value à un testeur.

Afin d'améliorer les performances, il est possible d'écarter systématiquement un certain nombre d'actions les plus fréquentes, par exemple deux, lors de l'entraînement. En effet, Ces actions sont généralement des actions d'exploration qui sont répétées de nombreuses fois par les testeurs d'entraînement, qui correspondent à un accès à des pages contenant de nombreuses informations et/ou des pages contenant des vulnérabilités essentielles au scénario. Ces pages sont accédées de nombreuses fois par les testeurs, qui ne sont pas capables de se souvenir de tout ce qu'il y a sur une page, ces accès multiples n'étant pas pertinent pour l'entraînement du modèle d'apprentissage dans le cadre de la présente invention.

La présente invention concerne également un système informatique comportant au moins un ordinateur, configuré pour mettre en œuvre un procédé selon l'invention. Ce système comporte par exemple un serveur sur lequel est hébergé le programme informatique, apte à communiquer avec l'ordinateur à partir duquel un testeur effectue un test d'intrusion.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Procédé mis en œuvre par ordinateur pour la génération de suggestions d'actions lors d'un test d'intrusion informatique sur une application web de production hébergée sur un serveur, comportant les étapes suivantes :
- collecte (1) de données brutes générées lors d'une pluralité de tests d'intrusion d'entraînement, effectués chacun par un testeur d'entraînement, sur au moins une application web d'entraînement, chaque test d'intrusion d'entraînement consistant en une suite d'actions effectuées par le testeur d'entraînement sur l'application web d'entraînement, ayant pour conséquence l'accès par le testeur d'entraînement à une pluralité de pages de l'application web d'entraînement, certaines combinaisons d'actions effectuées sur certaines pages générant l'identification de vulnérabilités de l'application web d'entraînement, lesdites données brutes comportant au moins, pour chaque test d'intrusion d'entraînement :
. une pluralité d'actions effectuées par ledit testeur d'entraînement,
. pour chaque action, une base de connaissance comportant :
.. l'ensemble des pages visitées par le testeur d'entraînement préalablement à ladite action,
.. si au moins un cookie a été généré préalablement à ladite action, l'ensemble des cookies générés préalablement à ladite action, et
- encodage (2) des données brutes en données d'entraînement, lors duquel chaque action est encodée dans un vecteur d'action de taille fixe, chaque base de connaissance est encodée dans un vecteur de base de taille fixe, et le vecteur de base comporte en outre un sous-vecteur de vulnérabilités comportant au moins le nombre de vulnérabilités identifiées préalablement à l'action correspondante à la base de connaissance,
- intégration (3) des données d'entraînement dans un programme informatique mettant en œuvre une méthode d'apprentissage automatique, en faisant correspondre à chaque base de connaissance l'action encodée réalisée à partir de cette base,
- utilisation (4) dudit programme informatique pour générer au moins une action probable en fonction de la base de connaissance correspondante lors d'un test d'intrusion sur ladite application web de production.

2. Procédé mis en œuvre par ordinateur pour la génération de suggestions d'actions lors d'un test d'intrusion informatique selon la revendication 1, dans lequel la méthode d'apprentissage automatique est une méthode de type forêt d'arbres décisionnels.

3. Procédé mis en œuvre par ordinateur pour la génération de suggestions d'actions lors d'un test d'intrusion informatique selon l'une des revendications 1 à 2, dans lequel lors de l'étape de collecte de données brutes, un filtre est mis en œuvre pour que ne soient pas collectées des données indésirables, lesdites données indésirables comportant les données générées par les interactions entre l'application web d'entraînement et des robots d'indexation, des botnets, et/ou des scanners de vulnérabilités.

4. Procédé mis en œuvre par ordinateur pour la génération de suggestions d'actions lors d'un test d'intrusion informatique selon l'une des revendications 1 à 3, dans lequel ladite base de connaissance comporte au moins deux blocs de connaissance, chaque bloc de connaissance correspondant à un profil utilisateur distinct utilisé par le testeur d'entraînement pour interagir avec l'application web d'entraînement, au moins deux blocs de connaissance correspondant à deux profils utilisateurs disposant de niveaux de privilège distincts, chaque bloc de connaissance comportant :
. l'ensemble des pages visitées par le testeur d'entraînement par l'intermédiaire du profil utilisateur correspondant,
. si au moins un cookie a été généré lors de l'utilisation de ce profil utilisateur pour interagir avec l'application web d'entraînement, l'ensemble des cookies générés lors de cette utilisation.

5. Procédé mis en œuvre par ordinateur pour la génération de suggestions d'actions lors d'un test d'intrusion informatique selon la revendication 4, dans lequel pour chaque bloc de connaissance, l'ensemble des pages visitées est encodé dans un sous-vecteur de pages de taille fixe, l'ensemble des cookies est encodé dans un sous-vecteur de cookies de taille fixe, et le vecteur de base comporte :
- au moins un sous-vecteur de vulnérabilités de taille fixe,
- au moins un sous-vecteur de pages et au moins un sous-vecteur de cookies issus chacun d'un bloc de connaissance correspondant à un profil utilisateur non identifié,
- au moins un sous-vecteur de pages et au moins un sous-vecteur de cookies issus chacun d'un bloc de connaissance correspondant à un profil utilisateur identifié qui a des droits d'accès restreints à l'application web d'entraînement, et
- au moins un sous-vecteur de pages et au moins un sous-vecteur de cookies issus chacun d'un bloc de connaissance correspondant à un profil utilisateur identifié qui a des droits d'accès non restreints à l'application web d'entraînement.

6. Procédé mis en œuvre par ordinateur pour la génération de suggestions d'actions lors d'un test d'intrusion informatique selon la revendication 5, dans lequel le vecteur de base comporte :
- un sous-vecteur de vulnérabilités de taille fixe,
- un sous-vecteur de pages et un sous-vecteur de cookies issus chacun d'un bloc de connaissance correspondant à un profil utilisateur non identifié,
- au moins deux sous-vecteurs de pages et au moins deux sous-vecteurs de cookies issus chacun d'un bloc de connaissance correspondant à un profil utilisateur identifié qui a des droits d'accès restreints à l'application web d'entraînement, et
- au moins deux sous-vecteurs de pages et au moins deux sous-vecteurs de cookies issus chacun d'un bloc de connaissance correspondant à un profil utilisateur identifié qui a des droits d'accès non restreints à l'application web d'entraînement.

7. Procédé mis en œuvre par ordinateur pour la génération de suggestions d'actions lors d'un test d'intrusion informatique selon la revendication 6, dans lequel le vecteur de base comporte en outre :
- un sous-vecteur agrégé de pages, résultant de l'agrégation de sous-vecteurs de pages issus chacun d'un bloc de connaissance correspondant à des profils utilisateurs identifiés ayant des droits d'accès restreints à l'application web d'entraînement,
- un sous-vecteur agrégé de cookies, résultant de l'agrégation de sous-vecteurs de cookies issus chacun d'un bloc de connaissance correspondant à des profils utilisateurs identifiés ayant des droits d'accès restreints à l'application web d'entraînement,
- un sous-vecteur agrégé de pages, résultant de l'agrégation de sous-vecteurs de pages issus chacun d'un bloc de connaissance correspondant à des profils utilisateurs identifiés ayant des droits d'accès non restreints à l'application web d'entraînement, et
- un sous-vecteur agrégé de cookies, résultant de l'agrégation de sous-vecteurs de cookies issus chacun d'un bloc de connaissance correspondant à des profils utilisateurs identifiés ayant des droits d'accès non restreints à l'application web d'entraînement.

8. Procédé mis en œuvre par ordinateur pour la génération de suggestions d'actions lors d'un test d'intrusion informatique selon l'une des revendications 5 à 7, dans lequel chaque sous-vecteur de cookies comporte une première moitié dans laquelle est encodé le cookie de session, et une deuxième moitié dans laquelle sont encodés tous les autres cookies considérés.

9. Procédé mis en œuvre par ordinateur pour la génération de suggestions d'actions lors d'un test d'intrusion informatique selon l'une des revendications 1 à 8, comportant une étape de sélection des tests d'intrusion d'entraînement, seules les données d'entraînement générées lors des tests d'intrusion d'entraînement sélectionnés étant intégrées audit programme informatique, la sélection étant effectuée à partir d'au moins un indicateur de performance, prenant en compte :
- le nombre de vulnérabilités identifiées lors du test d'intrusion d'entraînement,
- le nombre de vulnérabilités exploitables identifiées lors du test d'intrusion d'entraînement,
- le rapport entre le nombre de vulnérabilité identifiées et le nombre d'actions effectuées lors du test d'intrusion d'entraînement,
- le rapport entre le nombre de vulnérabilité identifiées et le nombre d'actions d'exploration, une action d'exploration étant une action destinée à augmenter les connaissances du testeur d'entraînement relatives à l'application web d'entraînement,
- le rapport entre le nombre de vulnérabilité identifiées et le nombre d'actions d'exploitation, une action d'exploitation étant une action lors de laquelle une charge utile destinée à l'exploitation d'une vulnérabilité est envoyée à l'application web d'entraînement.

10. Procédé mis en œuvre par ordinateur pour la génération de suggestions d'actions lors d'un test d'intrusion informatique selon l'une des revendications 1 à 9, dans lequel lors de l'étape d'intégration des données d'entraînement et d'utilisation du programme informatique, la méthode d'apprentissage automatique fait correspondre à chaque action encodée la base de connaissance correspondante, la précédente action effectuée, ainsi que la base de connaissance correspondante à la précédente action effectuée.

11. Procédé mis en œuvre par ordinateur pour la génération de suggestions d'actions lors d'un test d'intrusion informatique selon l'une des revendications 1 à 10, dans lequel lors de l'étape de collecte de données brutes, un filtre est mis en œuvre pour que ne soient pas collectées un certain nombre d'actions les plus fréquentes, et les bases de connaissance correspondantes.

12. Système informatique comportant au moins un ordinateur, configuré pour mettre en œuvre un procédé selon l'une des revendications 1 à 11.
